# EUROPEAN PATENT APPLICATION

(11) **EP 3 747 785 A1**
(43) Date of publication of application: **09.12.2020**
(21) Application number: 20177804.0
(22) Date of filing: 02.06.2020
(51) Int. Cl.: B65D 1/16, B65D 43/02, B65D 43/06, B65D 51/28

(54) **PACKAGING SYSTEM**

(30) Priority: 04.06.2019 GB 201907898
(71) Applicant: PACCOR Packaging GmbH, 40468 Düsseldorf (DE)
(72) Inventor: McCOURT, Kevin, Consett, Durham DH8 0QH (GB)
(74) Representative: Murgitroyd & Company

(57) **Abstract**

A thermoformed packaging system includes a lid comprising a lid screw thread; and a container comprising a container screw thread. The container also includes a chamber for receiving a product, an opening configured to be closed and sealed by the lid. The lid screw thread and the container screw thread are complementary such that the lid can be screwed to the container, thereby closing and sealing the opening.

## Description

The invention relates to a packaging system for the storage and transportation of food products or the like. More particularly, the invention relates to a thermoformed lid and a thermoformed container secured by a screw thread retaining mechanism.

### INTRODUCTION

It is generally desirable to package food products in a container having a leak-proof lid. Such containers and lids, collectively known as packaging systems, can be produced by several known means, such as thermoforming, vacuum forming, injection moulding, blow moulding, or the like.

It is known in the art that the contemplated methods for producing packaging systems vary in the nature of the materials used, and in the nature of the products formed. It is known in the art that some methods are better suited to application to a given material or structural feature. It is known in the art that some materials and structural features can only practically be produced by certain methods. It is known in the art that some materials and structural features are characteristic of a given method.

As a result, the manufacturing process by which a packaging system is obtained is largely dictated by the type of packaging system to be produced, including any desired structural and functional features, and the materials to be used therein. Moreover, the products themselves can be characterised by the way in which they are produced.

It is often desirable to make use of a thermoforming process to produce a packaging system. The thermoforming process is generally less expensive than other known processes, for example injection moulding, owing to the equipment and tooling used. The thermoforming process also imparts a variable gauge (i.e. thickness in the material of the final product) to the packaging system, which can be controlled such that it is small, typically between 0.35mm and 1.0mm. Thus, thermoformed packaging systems are typically less bulky than other known packaging systems, such as those produced by injection moulding, which have a typical gauge of 1.0mm to 2.0mm.

When employing a thermoformed packaging system, care must be taken when designing the lid and the container, as the lid and the container must form a liquid seal, and preferably a hermetic seal, therebetween. To this end, current thermoformed packaging systems include a push-fit clip mechanism for securing the lid to the container. Other current thermoformed packaging systems include a twist-fit clip mechanism having one or more slots on the container for cooperation with one or more protrusions on the lid.

Whilst such a push-fit or twist-fit clip mechanism ensures that the lid and the container are secured together, the mechanism must also ensure an adequate liquid seal therebetween. To this end, the means of attachment are often made very tight to minimise the risk of the food product leaking from the interface between the lid and the container. Such means of attachment often result in hermetic seals between the lid and the container, which is unnecessarily excessive for the purpose of the packaging system in question. As a result, the packaging system is constructed such that a large force is required to secure the lid to the container, and to remove the lid from the container. Therefore, the elderly and infirm typically find these mechanisms difficult to operate. Moreover, since a large force is needed to open and close the packaging system, the user often exerts an excessive amount of force upon the container and/or lid, thereby causing damage to the same, since the material of the thermoformed packaging generally has a small gauge.

Another disadvantage associated with known thermoformed packaging systems is that the clip mechanisms currently used are susceptible to unclipping in a sudden manner. This, in turn, can cause spillage of the contents of the container, owing to this sudden movement.

Alternative packaging systems are also known, including injection moulded packaging systems. Such injection moulded packaging systems may be generally advantageous for packaging systems having a larger gauge, typically an average gauge of between 1.0mm and 2.0mm. This, in turn, may also allow for more defined mechanisms of securing a lid to a container, such as a screw thread mechanism with pronounced undercut features. However, those skilled in the art generally desire packaging systems having a smaller gauge and produced by the more desirable thermoforming process.

Moreover, it is desirable to use a readily recyclable material for the packaging system, such that it can be recycled by the end user. Such materials are commonplace in the thermoforming process, and generally less suitable for the injection moulding process. Thus, thermoforming processes and thermoforming packaging systems are more desirable.

Screw thread retaining mechanisms are not generally known in the art for packaging systems made by a thermoforming process. This may, for example, be due to the variability in gauge and the many variables that are required to be controlled. For example, the pitch, depth and width of the screw thread all need to be controlled whilst also maintaining the desired gauge and product size. This provides a multitude of variables that need to be controlled simultaneously during the manufacturing process, which is generally not practical.

Moreover, to achieve a screw thread on a thermoformed packaging system, specialist or bespoke tooling would often be required, for example two-part tooling, in order to reliably produce a commercially viable packaging system having a screw thread that creates an adequate liquid seal and a consistent gauge. This makes the process more expensive, cumbersome and time-consuming, and so discourages those in the art from making screw thread mechanisms by a thermoforming process.

As a result, the skilled person in the art generally seeks a thermoforming process having alternate retaining mechanisms, for example, the push-fit or twist-fit clip mechanisms discussed above.

Therefore, it is an aim of this invention to provide a retaining mechanism that overcomes the disadvantages of those known in the art. In particular, it is an aim of this invention to provide an improved retaining mechanism for a packaging system that provides a leak-resistant seal between a lid and a container whilst allowing the lid and the container to be easily secured and unsecured, with no damage to the container and/or no spillage of the contents therein.

As will become clear by the remaining description, drawings and claims, the thermoformed packaging system described herein obviates and/or mitigates the disadvantages associated with known packaging systems.

### SUMMARY OF INVENTION

In accordance with one embodiment, there is provided a thermoformed packaging system comprising: a lid comprising a lid screw thread; and a container comprising a container screw thread, a chamber for receiving a product, and an opening configured to be closed and sealed by the lid. The lid screw thread and the container screw thread are complementary such that the lid can be screwed to the container, thereby closing and sealing the opening.

That is, there is provided a thermoformed packaging system, or a packaging system formed or produced by a thermoforming process, including a lid and a container. The lid and the container may each, independently, be formed or produced by a thermoforming process. The lid includes a lid screw thread and may be generally circular. The container includes a container screw thread, a chamber for receiving a product, and an opening formed to allow ingress and egress of the product to the chamber. The opening is configured to be closed and sealed, preferably liquid or hermetically sealed, by the lid.

In other words, in the first embodiment there is provided a packaging system including a lid and a container, wherein the lid and the container each include complementary screw threads for securing the lid to the container, and wherein the lid and the container are each thermoformed.

This provides the advantage that a good liquid seal is produced between the lid and the container, whilst the lid and the container are formed by a thermoforming process. That is, surprisingly, the inventors of the present invention have found that a thermoformed packaging system including a screw thread mechanism as a mechanism by which the lid may be secured to the container can be produced, provided that the various variables in the thermoforming process are carefully controlled in the described manner.

The lid screw thread and the container screw thread are complementary. That is, the lid screw thread and the container screw thread are arranged spatially to interact and screw together, thereby forming a seal. The complementary features may lie in the pitch, width and depth of each screw thread, such that they interact to form a liquid or hermetic seal. The engaging surface of each screw thread may be in face-to-face arrangement thereby forming a liquid seal or a hermetic seal between the lid and the container.

It is preferable that the lid and the container form a leak-resistant seal therebetween. That is, at the interface, for example, at the respective screw threads, between the lid and the container, there is provided a leak-resistant seal or a liquid seal.

This provides the advantage that the screw thread mechanism provides an adequate seal to ensure product does not leak from the container when sealed whilst providing a packaging system that can be assembled and dissembled with ease. That is, a leak-resistant seal has been found to be adequate, rather than providing a hermetic clip-seal, which is often difficult to open and close. However, in alternative embodiments, a hermetic seal may be provided.

The lid and the container may be in a releasable relationship, such that the container can be sealed by, or released from, the lid. That is, the lid may close, or open, the container.

Moreover, the container is generally cylindrical and includes a base and a cylindrical side wall. The base and cylindrical side wall may form the chamber having an opening at one end. The container screw thread may be formed as part of the cylindrical side wall, or as part of an additional or integral rim at the uppermost part of the container, in which the opening is located. That is, the rim may surround and enclose the opening.

The cylindrical side wall may have an inner surface and an outer surface. The inner surface surrounds and defines a volume of the chamber for receiving a product. The outer surface defines an external surface of the container. In one alternative the cylindrical side wall may be a single-walled structure, an internal face of the single wall comprising the said inner surface and an external face of the single wall comprising the said outer surface. In another alternative, the cylindrical side wall may be a plural-walled structure and for example a dual-walled structure having an inner wall and an outer wall, an internal face of the inner wall comprising the said inner surface and an external face of the outer wall comprising the said outer surface. Similarly, a rim, as part of the container, may have an inner wall and an outer wall, or an inner surface and an outer surface.

Optionally, a surface of the container may comprise the container screw thread.

Optionally, an inner surface of the container may comprise the container screw thread.

That is, the inner surface of the container, as discussed above, may include the container screw thread.

This provides the advantage that the container screw thread is protected from external damage.

Additionally or alternatively an outer surface of the container comprises the container screw thread.

Optionally, the container may be a primary container, and the packaging system may also include a secondary container. The primary container may include a primary retaining mechanism for securing the primary container to the lid. The secondary container may include a secondary retaining mechanism for securing the secondary container to the lid. Optionally, the secondary container may be enclosed by the primary container and the lid in use. Alternatively, the primary container may be enclosed by the secondary container and the lid in use. Further alternatively, the containers may be in a side-by-side arrangement and secured to the lid.

At least one of the primary and secondary retaining mechanism comprises a screw thread. That is, one, or both, of the primary and secondary retaining mechanisms comprise a screw thread. The primary retaining mechanism may be a screw thread and the secondary retaining mechanism may be a clip retaining mechanism. The primary retaining mechanism may be a clip retaining mechanism and the secondary retaining mechanism may be a screw thread. The primary and the secondary retaining mechanisms may each be screw threads. Where a retaining mechanism involves a screw thread, it will be recognised that any of the screw threads described herein are applicable.

Optionally, the lid may comprise a central closure formation and an outer rim. The lid may also comprise an inner protruding portion formed in the closure formation including a retaining mechanism for securing a secondary container. The retaining mechanism may be complementary to the secondary retaining mechanism. Another retaining mechanism may be formed in the outer rim and may be complementary to the primary retaining mechanism. As discussed above, the primary and secondary retaining mechanisms may be, independently, a screw thread or a clip retaining mechanism. It will be recognised that the corresponding retaining mechanism of the lid is complementary, i.e. has corresponding features, to the provided retaining mechanism.

This provides the advantage that a secondary container can be utilised for separate storage of a second food product from the first food product within the chamber of the container. Moreover, a single lid can be provided for both a primary container and a secondary container.

Optionally, the packaging system may also comprise a secondary container with a secondary container screw thread; where the retaining mechanism formed in the closure formation may comprise a second lid screw thread for mating with the secondary container screw thread.

That is, a secondary container may be provided for retention to the second screw thread of the lid. That is, the second screw thread may be complementary to a screw thread of the secondary container for securing thereto. The primary container may be provided with either a screw thread retaining mechanism, a clip retaining mechanism, or the like.

This provides the advantage that one food product can be separated from another in a single packaging system. Typically, it is known in the art to provide a secondary container independently from a primary container, such that the secondary container is provided loose. However, this requires the manufacture of a second lid or additional sealing film. Moreover, food product within the primary container can contaminate such a lid of a secondary container. The provided secondary container in the present invention mitigates these known disadvantages.

Optionally, the lid may comprises a central closure formation and an outer rim, the outer rim including the lid screw thread.

Optionally the outer rim may comprise an inner rim wall and an outer rim wall separated by a space therebetween, which is generally annular owing to the circular lid. Thus, the generally annular space may be formed between an outer face of the inner wall (i.e. an inner wall of the annular space) and an inner face of the outer wall (i.e. an outer wall of the annular space). The outer rim may include the lid screw thread formed as part of a surface comprising one of the said walls of the annular space.

This provides the advantage that the lid screw thread is protected from external damage.

Optionally, the outer rim may include an inner wall and an outer wall, wherein the inner wall comprises the lid screw thread.

That is, the outer rim may include an inner wall and an outer wall, with the lid screw thread being located as part of the inner wall. That is, the generally annular space may be formed between the inner wall and the outer wall.

This provides the advantage that the lid screw thread is protected from external damage, and that several lids may be stacked together.

Optionally, an outer wall of the container may comprise the container screw thread.

That is, the container may include an outer wall which includes the container screw thread. The container screw thread may be formed as part of the outer wall of the container.

This provides the advantage that food product held within the container does not contaminate the container screw thread.

Optionally, the outer rim may include an inner wall and an outer wall, wherein the outer wall comprises the lid screw thread.

That is, the outer rim of the lid may include an inner wall and an outer wall, wherein the lid screw thread is formed as part of the outer wall. That is, the lid screw thread forms part of, or all of, the outer wall of the lid screw thread.

This provides the advantage that food product held within the container during use does not contaminate the lid screw thread.

Optionally, the container may comprise a flange configured to cooperate with the annular space of the lid.

That is, the container may include a flange, a lip or the like that is configured in such a way that it can cooperate with, or interact with, the annular space of the lid. That is, the flange, the lip or the like may be spatially arranged such that it comes into contact with the annular space of the lid. Furthermore, the flange, the lip of the like may form an abutment surface with a surface of the annular space.

This provides the advantage that the container can be easily located to the lid.

Optionally, the lid screw thread and/or the container screw thread may include more than one revolution.

That is, the lid screw thread, the container screw thread, or both, may include more than one single revolution. That is, the lid screw thread and/or the container screw thread may include at least one complete helical turn, or span greater than 360 degrees, preferably at least 450 degrees. Preferably, the lid screw thread and/or container screw thread include no greater than two revolutions. That is, the lid screw thread and/or the container screw thread include no greater than two complete helical turns, or not spanning greater than 720 degrees, preferably no greater than 540 degrees.

For example, the lid screw thread and/or the container screw thread may span between about 360 degrees to about 720 degrees. Preferably, the lid screw thread and/or container screw thread may span between about 450 degrees and about 720 degrees, or may span between about 360 degrees and 540 degrees. Most preferably, the lid screw thread and/or container screw thread may span between about 450 degree and about 540 degrees.

That is, the lid screw thread and/or container screw thread may include between 1 and 2 revolutions. Preferably, the lid screw thread and/or container screw thread include between about 1.25 and about 2 revolutions. Most preferably, the lid screw thread and/or the container screw thread includes about 1.5 revolutions.

This provides the advantage that a good liquid seal is created with the minimal amount of screw turns. Moreover, the user does not have to turn the lid more than half a turn, typically no more than quarter of a turn, to achieve a good liquid seal.

Optionally, the container screw thread may include a pitch between 3mm and 4mm.

That is, a distance between a centre point of a first thread and a centre point of a second adjacent thread is between about 3mm and about 4mm.

This provides the advantage that a good liquid seal is created reliably using conventional thermoforming apparatus.

Optionally, the container screw thread may include a width between about 2.85mm and about 3.85mm.

That is, the thickness of the thread, or the distance between an upper point and a lower point of each thread, is between 2.85mm and 3.85mm.

This provides the advantage that a good liquid seal is created reliably using conventional thermoforming apparatus.

Optionally, the container screw thread and/or the lid screw thread may include a depth between about 0.5mm and about 1.0mm. Preferably, the depth is between about 0.6mm and about 0.8mm. Most preferably, the depth is about 0.7mm.

This provides the advantage that a good liquid seal is created reliably using conventional thermoforming apparatus.

Optionally, the lid may include a surface formation configured to assist the user in securing or removing the lid from the container.

That is, the lid may include a surface, a feature, a surface feature, a structure or the like that is configured to assist a user when securing or removing the lid to or from the container.

This provides the advantage that the lid is easier for the elderly or infirm to secure the lid to the container, or to remove the lid from the container.

Optionally, the surface formation may be a textured surface of the outer rim.

For example, an outer surface of the outer rim may be knurled or may include a plurality of ribs about part, or all, of the circumference of the outer rim.

Optionally, the surface formation may comprise one or more finger recesses in the central closure formation of the lid.

Optionally, the lid may comprise an inner protruding portion formed in the closure formation including a retaining mechanism for securing a secondary container.

This provides the advantage that a secondary container can be utilised for separate storage of a second food product from the first food product within the chamber of the container. Moreover, a single lid can be provided for both a primary container and a secondary container.

Optionally, the packaging system may also comprise a secondary container with a secondary retaining mechanism; wherein the retaining mechanism of the closure formation is complementary to the secondary retaining mechanism.

That is, a secondary container may be provided for retention to the retaining mechanism of the lid. Optionally, the retaining mechanism of the closure formation may be a screw thread, and the secondary retaining mechanism may be a complementary screw thread.

This provides the advantage that one food product can be separated from another in a single packaging system. Typically, it is known in the art to provide a secondary container independently from a primary container, such that the secondary container is provided loose. However, this requires the manufacture of a second lid or additional sealing film. Moreover, food product within the primary container can contaminate such a lid of a secondary container. The provided secondary container in the present invention mitigates these known disadvantages.

Optionally, the lid and the container may independently comprise a thermoplastic polymer, for example, a polyester, polyolefin, polyamide, or the like.

For example, the lid and the container may independent comprise polystyrene (PS), polylactic acid (PLA), polyethylene (PE), polyethylene terephthalate (PET), polypropylene (PP), polyvinyl chloride (PVC), or the like. The lid and the container may independently comprise recycled or virgin materials of the list above.

Preferably, the lid and the container may independently comprise rPET, PET, or PP.

That is, the lid, the container, or both, may include any of the above mentioned materials, most preferably recycled polyethylene terephthalate (rPET), virgin polyethylene terephthalate, i.e. polyethylene terephthalate that has not been recycled but produced anew (PET), or polypropylene (PP).

The use of rPET or PET provides the advantage that the packaging system can be more readily recycled. The use of PP provides the advantage that the packaging system is more suited to heating in a microwave oven.

In accordance with another embodiment, there is provided a thermoformed lid for a thermoformed container having a screw thread for securing the thermoformed lid to the thermoformed container.

That is, the thermoformed lid may have any, or all, of the features, and thus advantages, as discussed in relation to the lid of the thermoformed packaging system.

In accordance with another embodiment, there is provided a thermoformed container for a thermoformed lid having a screw thread for securing the thermoformed container to the thermoformed lid.

That is, the thermoformed container may have any, or all, of the features, and thus advantages, as discussed in relation to the container of the thermoformed packaging system.

In accordance with another embodiment, there is provided a thermoformed packaging kit of parts comprising a plurality of components that can be secured together by a screw thread.

The plurality of components may include a container and a lid, and optionally a secondary container.

That is, the kit of parts may include a container, a lid and, optionally, a secondary container, having any, or all, of the features, and thus advantages, as discussed herein.

In accordance with another embodiment, there is provided a method of thermoforming a packaging system according to any preceding claim, the method comprising the steps of: providing a sheet material; heating the sheet material and applying the sheet material into one or more moulds; cooling the sheet material in the one or more moulds to provide one or more moulded articles; and separating the one or more moulded articles from the sheet material to provide one or more packaging systems and skeletal waste.

That is, there is provided a method of thermoforming a packaging system, the method comprising the steps of:
providing a sheet material;
heating the sheet material and applying the sheet material into one or more moulds; thereby forming at least one lid comprising a lid screw thread and at least one container comprising a container screw thread, a chamber for receiving a product, and an opening configured to be closed and sealed by the lid, wherein the lid screw thread and the container screw thread are complementary;
cooling the sheet material in the one or more moulds; and separating the moulded articles comprising the at least one lid and the at least one container from the sheet material to provide one or more packaging systems as above described and skeletal waste

This provides the advantage that a packaging system with a screw-threaded lid retaining mechanism can be manufactured in a thermoforming process.

Optionally, the step of heating the sheet material and applying the sheet material into one or more moulds includes one or more of: applying vacuum, applying pressure, and applying plugging.

That is, the step of heating the sheet material may include applying vacuum, pressure and/or plugging. The application of plugging is a mechanic positive pressure applied to the sheet material to force the same into, or towards, a mould. The application of pressure may include air pressure or the like.

This provides the advantage that the sheet material effectively takes on the shape of the mould, thereby providing a more defined screw thread on the lid and/or container.

Optionally, the step of cooling the sheet material includes one or more of: applying a water bath, applying a water jacket, applying a condenser, and applying a jet of cool air.

That is, the step of cooling the sheet material, whilst within the mould, may include the application of a water bath, a water jacket, a condenser and/or a jet of cool air. Preferably, a water jacket is applied, and may be applied within, or as part as, the mould.

This provides the advantage that the cooling action of the sheet material can be controlled to effectively create a screw thread mechanism.

Optionally, the step of separating the one or more moulded articles from the sheet material includes the step of cutting, perforating, scoring or weakening the sheet material; and subsequently pushing the moulded articles out of the cut, perforated, scored or weakened sheet material.

That is, the sheet material may be cut, perforated, scored or weakened along an axis that separates the moulded article from the remaining sheet material, or adjacent moulded articles. This may be achieved through the use of blades, knives or the like. The separated moulded articles may be pushed out of the sheet material.

This provides the advantage that the moulded articles can easily be removed from the remaining sheet material.

Optionally, the method may also include the step of stacking the one or more packaging systems.

That is, the method may also include the step of stacking, on top of one another, packaging systems created from adjacent batches of moulded articles.

This provides the advantage that the packaging systems can be stored effectively after production.

Optionally, the method may also include the step of recycling or reusing the skeletal waste.

This provides the advantage that less waste is produced.

Optionally, the sheet material may comprise a thermoplastic polymer, for example, a polyester, polyolefin, polyamide, or the like.

For example, the sheet material may comprise polystyrene (PS),, nylon, polylactic acid (PLA), polyethylene (PE), polyethylene terephthalate (PET), polypropylene (PP), polyvinyl chloride (PVC), or the like. The sheet material may be a recycled or virgin material outlined in the above list.

Preferably, the sheet material may comprise rPET, PET or PP.

That is, the sheet material may include recycled polyethylene terephthalate (rPET), virgin polyethylene terephthalate, i.e. polyethylene terephthalate that has not been recycled but produced anew (PET), or polypropylene (PP).

The use of rPET or PET provides the advantage that the produced packaging system can be more readily recycled. The use of PP provides the advantage that the produced packaging system is more suited to heating in a microwave oven.

In accordance with another embodiment, there is provided a thermoforming apparatus for implementing the method of thermoforming a packaging system as described herein.

That is, there is provided an apparatus configured to implement the method discussed herein.

The thermoforming apparatus may include a sheet material, optionally on a reel, a heating station, a forming station, a cutting station and a stacking station.

Optionally, the heating station may include one or more heating elements. Optionally, the forming station may include one or more plugging mechanisms, vacuums or pressure application mechanisms. Optionally, the cutting station may include one or more blades. The sheet material may be transported on a conveyor, a belt, or gripped by a series of chains and transported through the apparatus. Skeletal waste may be collected on a reel towards the terminus of the apparatus, or fed through an in-line granulation system.

### BRIEF DESCRIPTION OF DRAWINGS

The accompanying drawings illustrate presently exemplary embodiments of the disclosure, and together with the general description given above and the detailed description of the embodiments given below, serve to explain, by way of example only, the principles of the disclosure. In the accompanying drawings:
Figure 1 is a perspective view of a packaging system according to one embodiment of the invention;
Figure 2 is an exploded perspective view of the packaging system of Figure 1;
Figure 3 is an exploded side view of the packaging system of Figure 1;
Figure 4 is a perspective view of a lid of the packaging system of Figure 1;
Figure 5 is a top view of the lid of Figure 4;
Figure 6 is a perspective view of a container of the packaging system of Figure 1;
Figure 7 is a top view of the container of Figure 6;
Figure 8 is a cross-sectional side view of the packaging system of Figure 1;
Figure 9 is an enlarged view of the cross-section side view of Figure 8;
Figure 10 is a cross-sectional side view of the lid of Figure 4;
Figure 11 is a cross-sectional side view of the container of Figure 6;
Figure 12 is an enlarged cross-sectional perspective view of the container of Figure 6;
Figure 13 is a perspective view of a user removing the lid of the packaging system depicted in Figure 1;
Figure 14 is a perspective view of a packaging system according to another embodiment of the invention;
Figure 15 is a top view of the packaging system of Figure 14;
Figure 16 is a perspective view of a user removing the lid of the packaging system depicted in Figure 14;
Figure 17 is an exploded perspective view of a packing system according to another embodiment of the invention;
Figure 18 is a cross-sectional side view of the packaging system of Figure 17 in the assembled condition;
Figure 19 is a basic thermoforming diagram illustrating an apparatus for thermoforming the packaging systems described herein in accordance with one embodiment; and

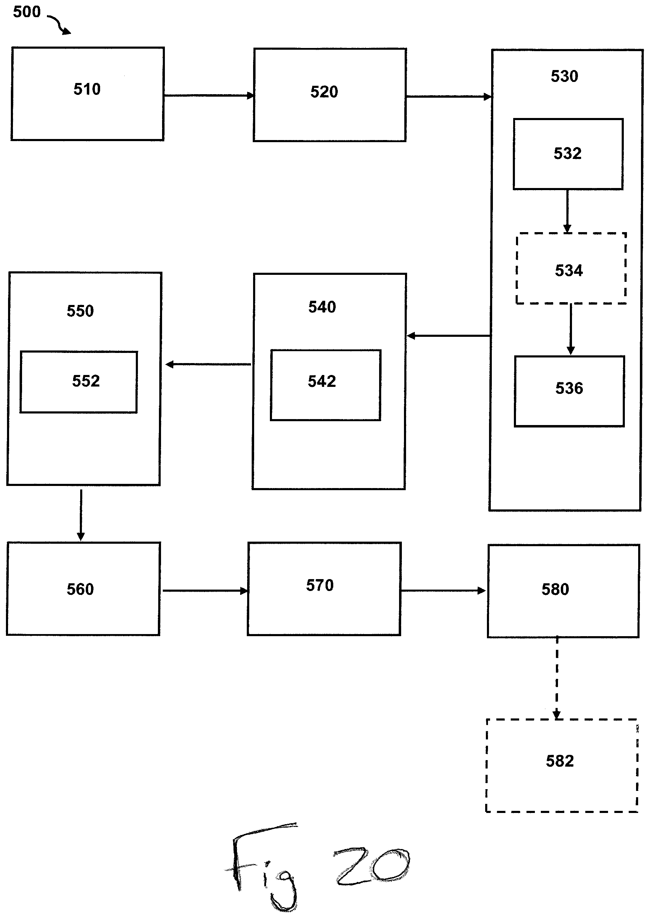

Figure 20 is a block diagram illustrating a method of thermoforming the packaging systems described herein in accordance with one embodiment.

### DETAILED DESCRIPTION

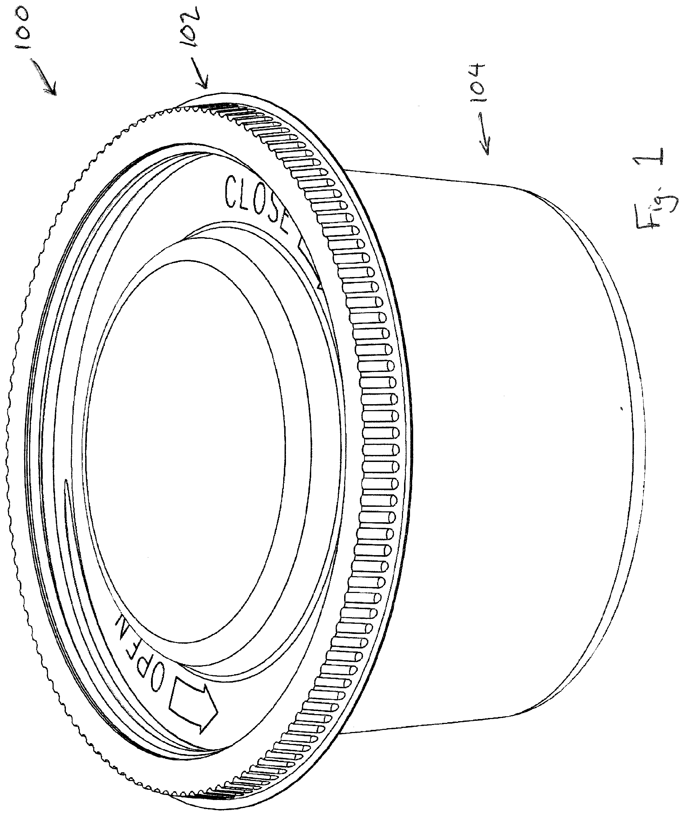

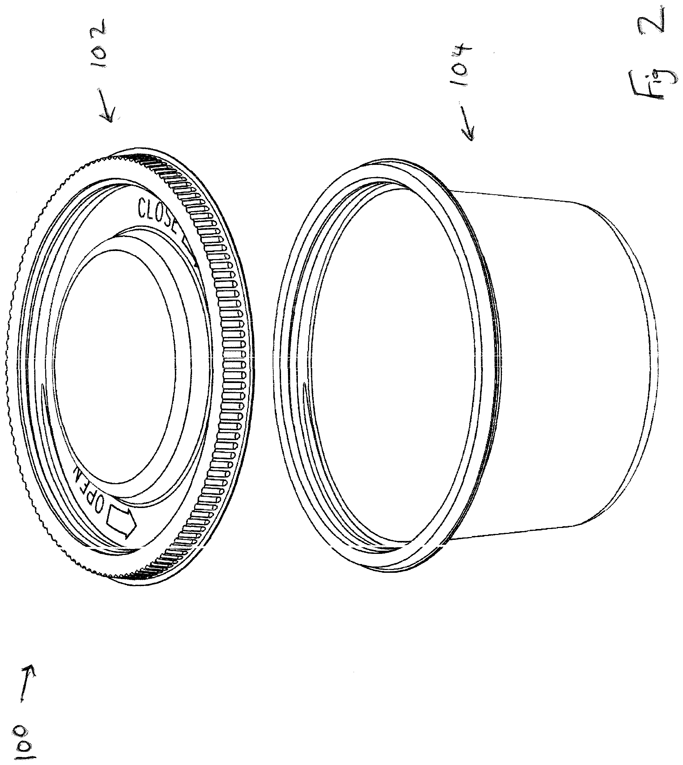

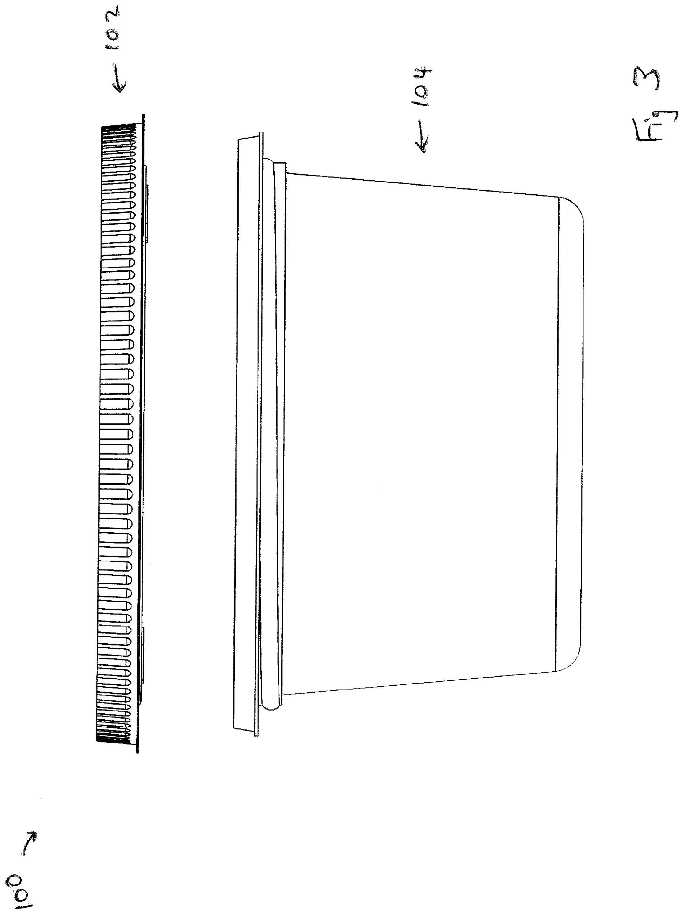

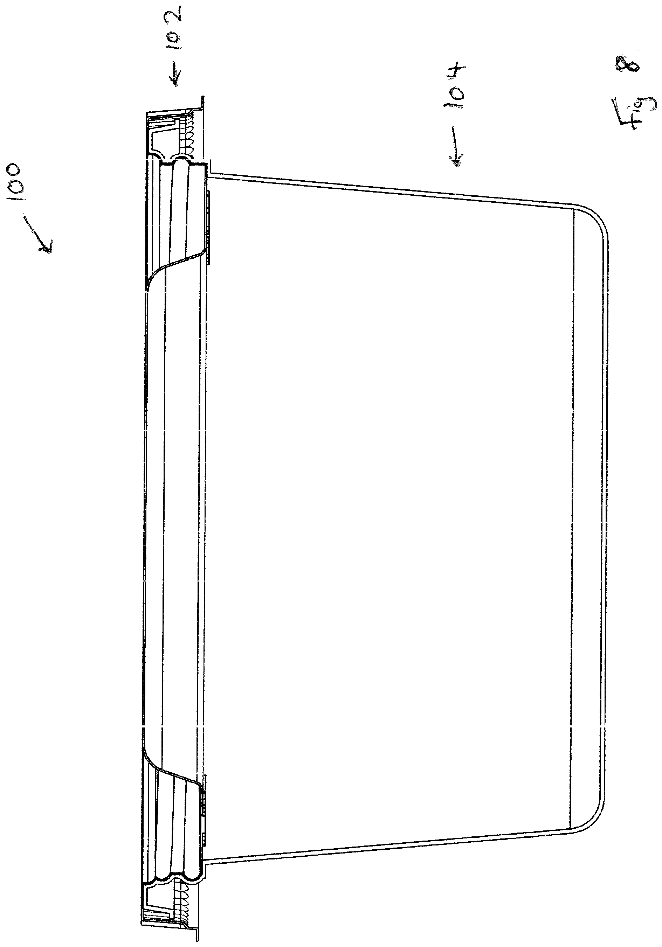

Referring to Figures 1 to 4, 8, 9 and 13, a packaging system 100 according to one embodiment includes a lid 102 and a container 104. The lid 102 and the container 104 are each generally circular in this example.

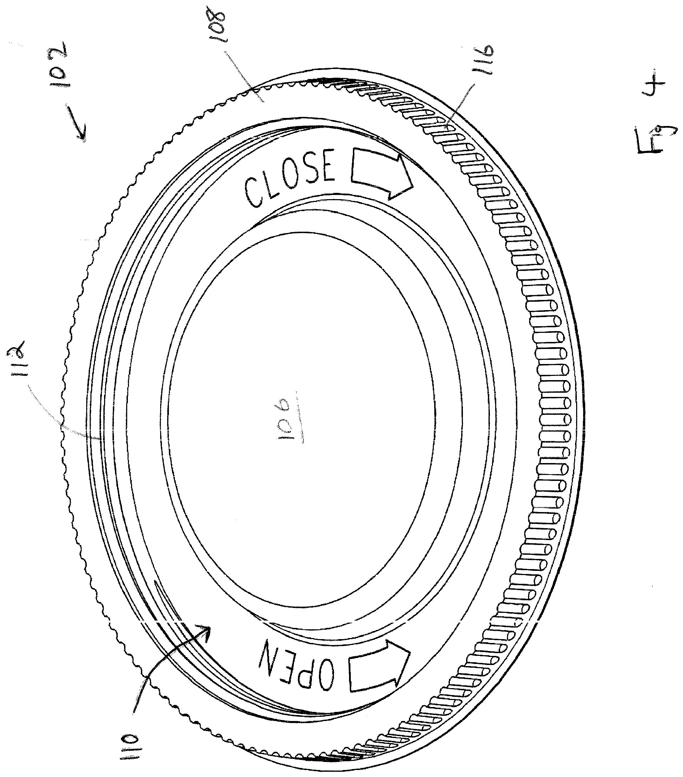

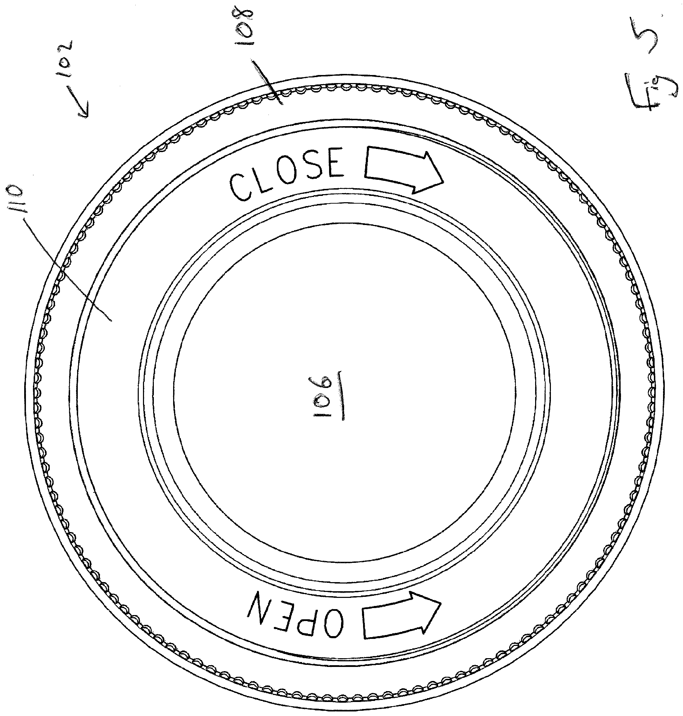

With particular reference to Figures 4, 5 and 9, the lid 102 includes a central portion 106, which is domed in the depicted example, and an outer rim 108. The central portion 106 and the outer rim 108 are separated by a generally annular shaped space 110. The outer rim 108 is generally formed by an inner wall having a screw thread 112 formed therein, and an outer wall 114. The outer wall 114 is shown as having a plurality of ribs 116 for improving the gripping interaction between the lid 102 and the user's hand during use. A circumferential flange 118 is also provided at the outer wall 116.

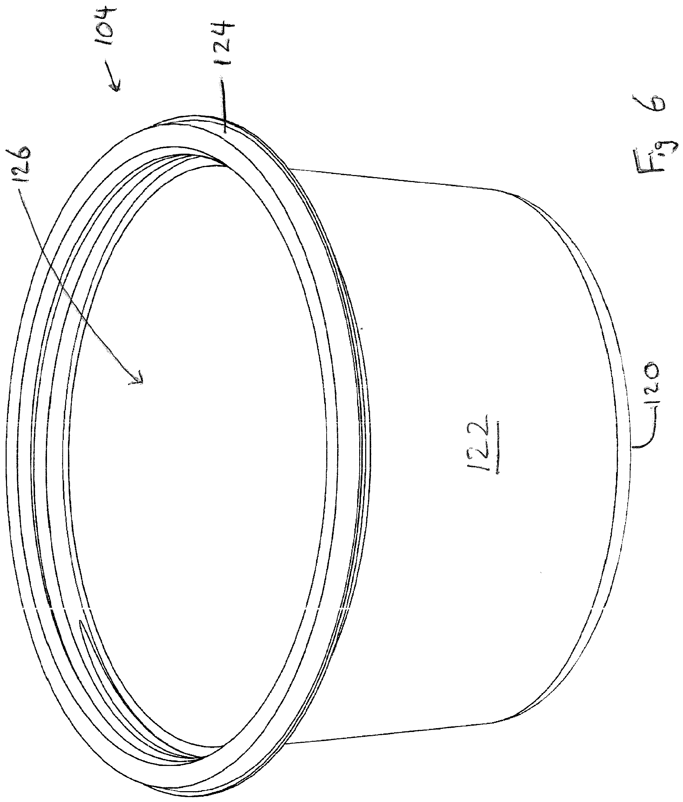

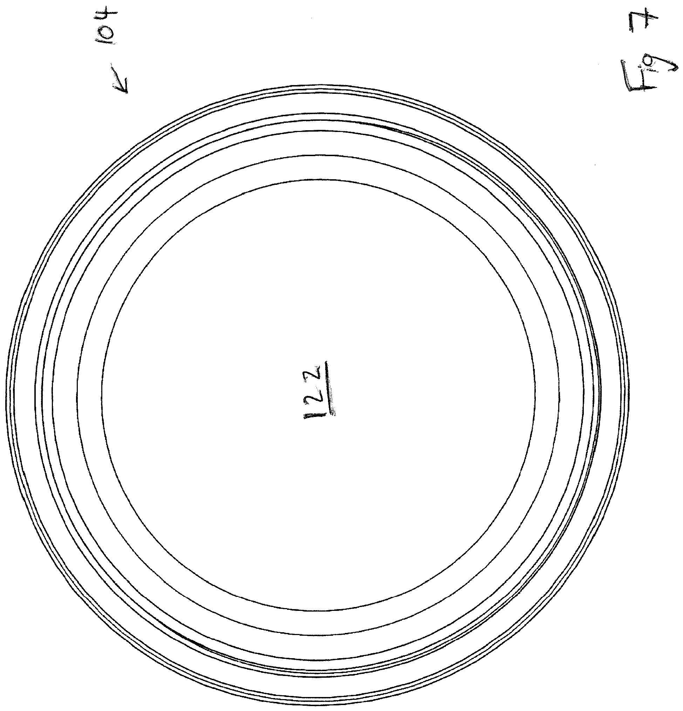

With reference to Figures 6, 7, 9 and 12, the container 104 includes a generally cylindrical base 120 and a generally cylindrical side wall 122. The container 104 is provided with an upper rim 124 and an opening 126 for the ingress or egress of products. The uppermost region of the upper rim 124 is generally flat, and the upper rim 124 includes a flange 128.

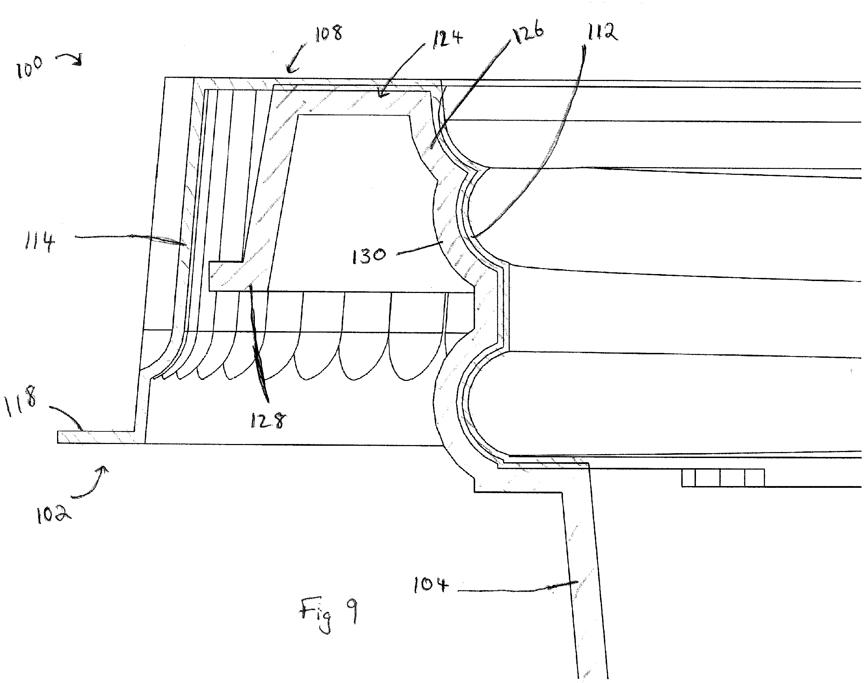

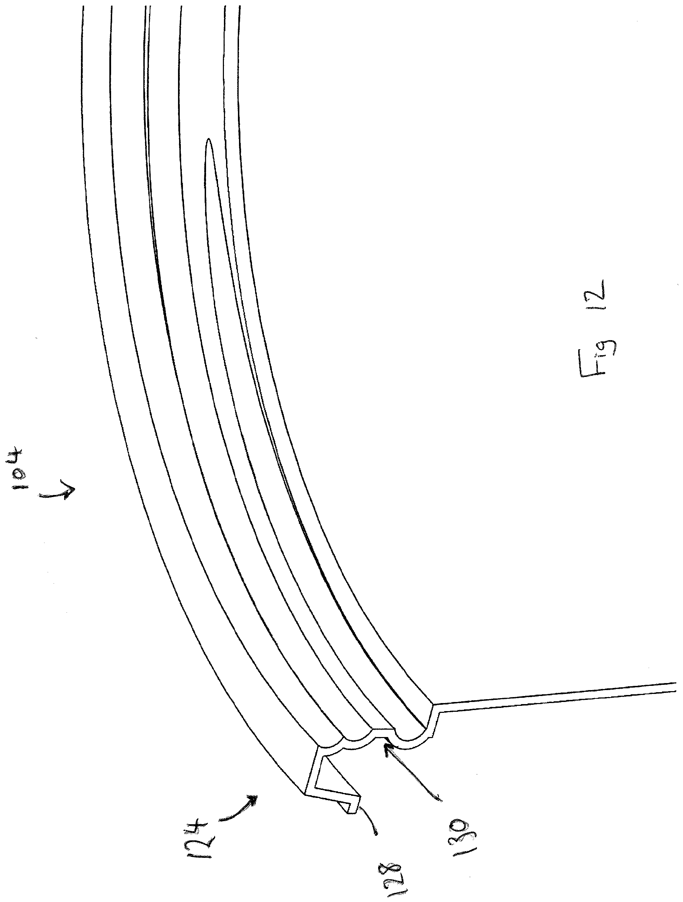

Referring particularly to Figures 9 and 12, the container 104 is also provided with a screw thread 130, which is formed as part of the generally cylindrical side wall 122 at a point in which it meets the upper rim 124. The container 104 also contains a groove 126 at the stop of the screw thread 130 that aids stacking and closure lead in.

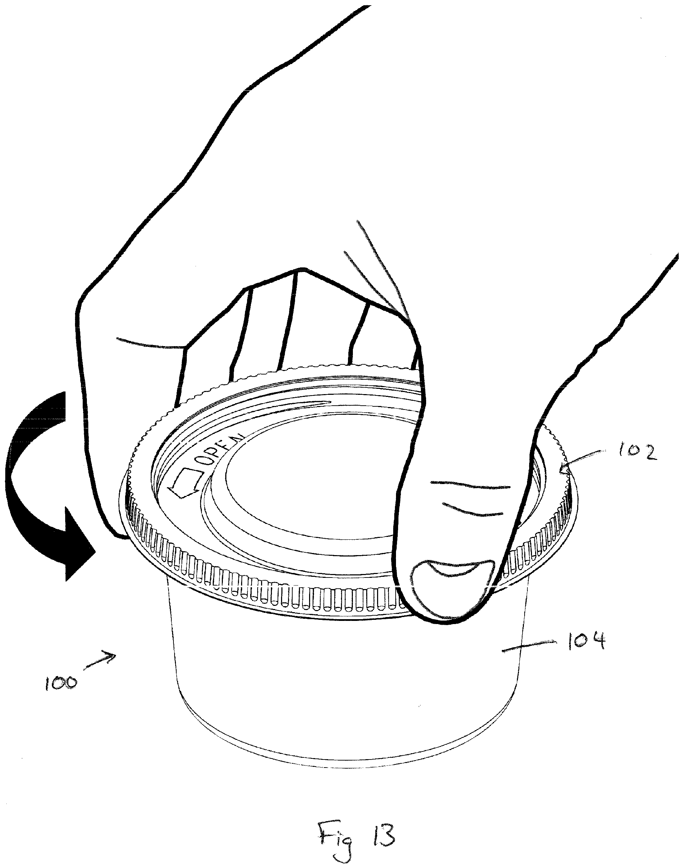

The packaging system 100, as shown in Figure 13, can be assembled by screwing the lid 102 to the container 104 in a clockwise direction, such that the respective screw threads 112, 130 engage to secure the lid 102 to the container 104. The screw threads 112, 130 generally correspond to one another in shape, i.e. they are complementary, to ensure a liquid resistant seal. The packaging system 100 can be dissembled by screwing the lid 102 from the container 104 in an opposite, i.e. anticlockwise, direction, such that the respective screw threads 112, 130 disengage to release the lid 102 from the container 104.

In the described example, each screw thread 112, 130 includes 1.5 revolutions such that the user screws the lid 102 approximately 90 degrees to approximately 120 degrees to secure it to the container 104 and close the opening 126 (see Figure 6).

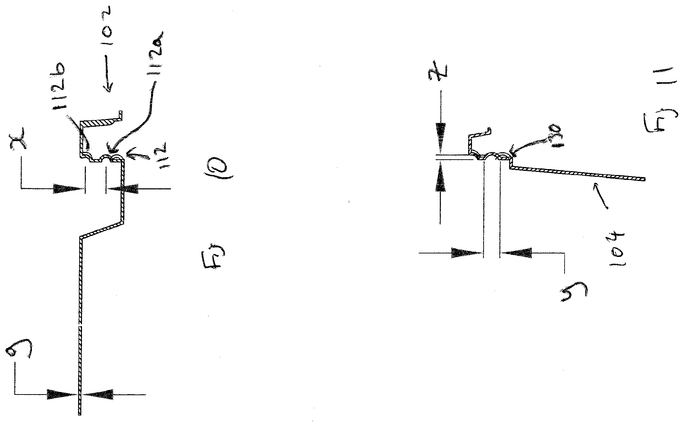

Each screw thread 112, 130 includes a pitch, a width and a depth. The pitch of each screw thread 112, 130 is defined as the distance between each thread of the screw threads 112, 130. For example, as shown in Figure 10, the pitch of the screw thread 112 of the lid 102 is defined as distance x, defining a distance between a centre of a first thread 112a and a centre of a second thread 112b.

The width of each screw thread 112, 130 is defined as the thickness of the thread itself. For example, as shown in Figure 11, the width of the screw thread 130 of the container 104 is defined as distance y.

Finally, the depth of each screw thread 112, 130 is defined as the distance between the innermost point of the screw thread 112, 130 and the outermost point of the screw thread 112, 130. For example, as shown in Figure 11, the depth of the screw thread 130 of the container 104 is defined as distance z.

As will be appreciated by those skilled in the art, the screw threads 112, 130 of the lid 102 and the container 104 respectively are complementary to one another. That is, given the dimensions of one of the screw threads, the skilled person can readily calculate and construct the corresponding screw thread.

The inventors have found that it is important to construct a screw thread 112, 130 with the correct pitch, width and depth to achieve a liquid seal when the lid 102 is secured to the container 104, and to achieve a successful manufacture of the product by a thermoforming process. As will be appreciated by those skilled in the art, there are three variables that can all be varied with respect to one another, and with respect to the gauge (i.e. the thickness) of the starting sheet material. The gauge of the material is indicated by dimension g in Figure 10.

The inventors have found that, surprisingly, the required pitch depends on the width of the screw thread, and that the width, in turn, depends on the gauge of the material used. That is, the pitch of the screw thread has been found to be dependent upon the gauge of the material used. Therefore, it has become clear that the control of the thermoforming process is vital in order to ensure a constant gauge, and thus achieving the desired pitch of the screw thread.

Table 1 shows a possible example of the dimensions of a screw thread used in the packaging system 100 of Figures 1 to 13. The dimensions below are described in relation to the container 104 having a height of 50mm and a diameter of 89.06mm. It will be appreciated that the lid 102, having a height of 6.38mm, a diameter of 94.25mm and a gauge of 0.50mm, will have corresponding dimensions to fit accordingly.

**Table 1: An example of the dimensions of a container screw thread 130 of container 104.**

| | |
|---|---|
| Pitch | 3.25mm |
| Width | 3.00mm |
| Depth | 0.70mm |
| Gauge | 0.5mm |
| Revolutions of thread | 1.5 |

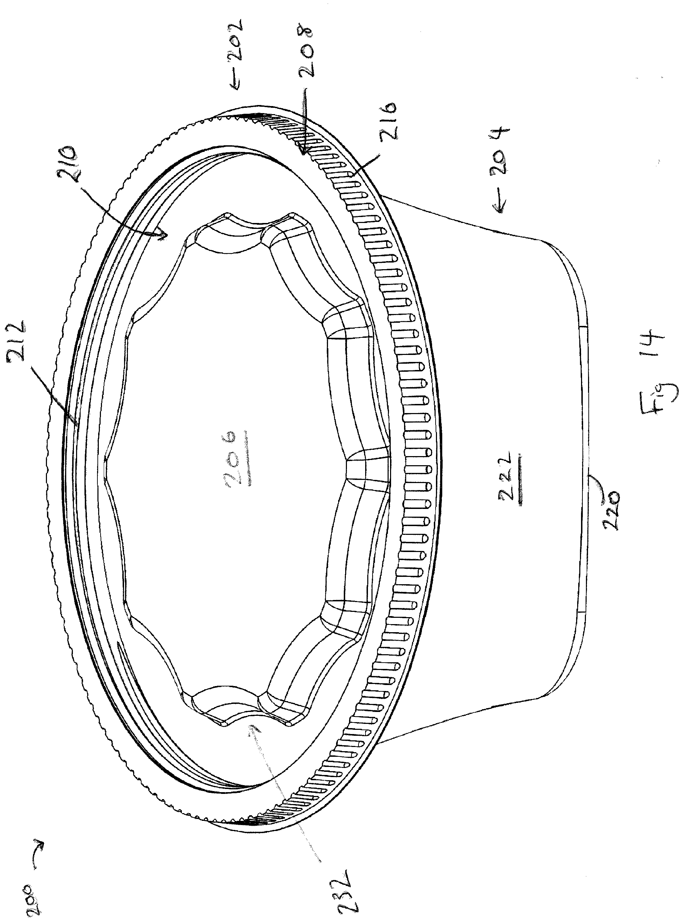

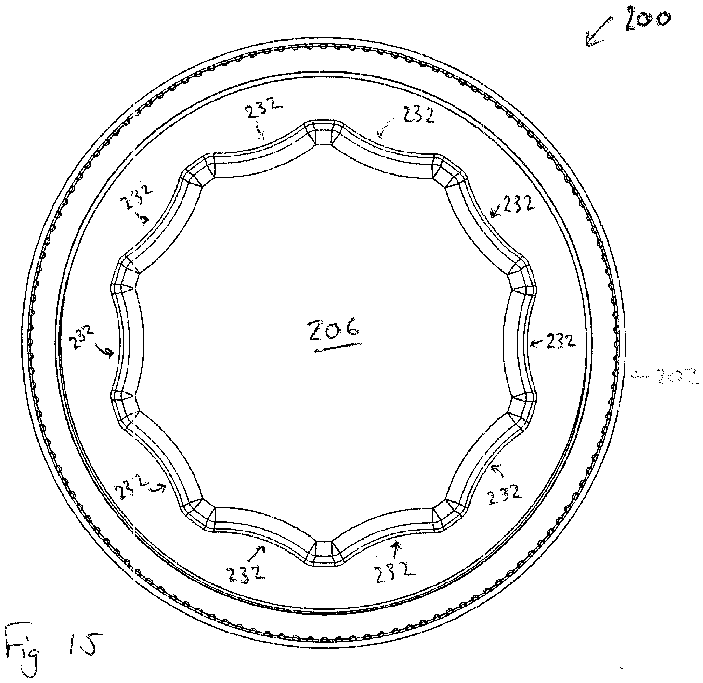

Referring now to Figures 14 and 15, another embodiment of a packaging system 200 is depicted including a lid 202 and a container 204. The lid 202 and the container 204 are substantially the same as that described in relation to Figures 1 to 10 and 13.

The lid 202 is shown as including a central portion 206 and an outer rim 208 separated by a generally annular shaped space 210. The outer rim 208 is provided with a plurality of ribs 216 on the outer wall of the outer rim 208. The lid 202 is provided with a screw thread 212 as described above.

The container 204 includes a substantially circular base 220 and a substantially circular side wall 222. The container 204 also includes an upper rim (not shown) having a screw thread (not shown) that corresponds to the screw thread 212 of the lid 202, as described above.

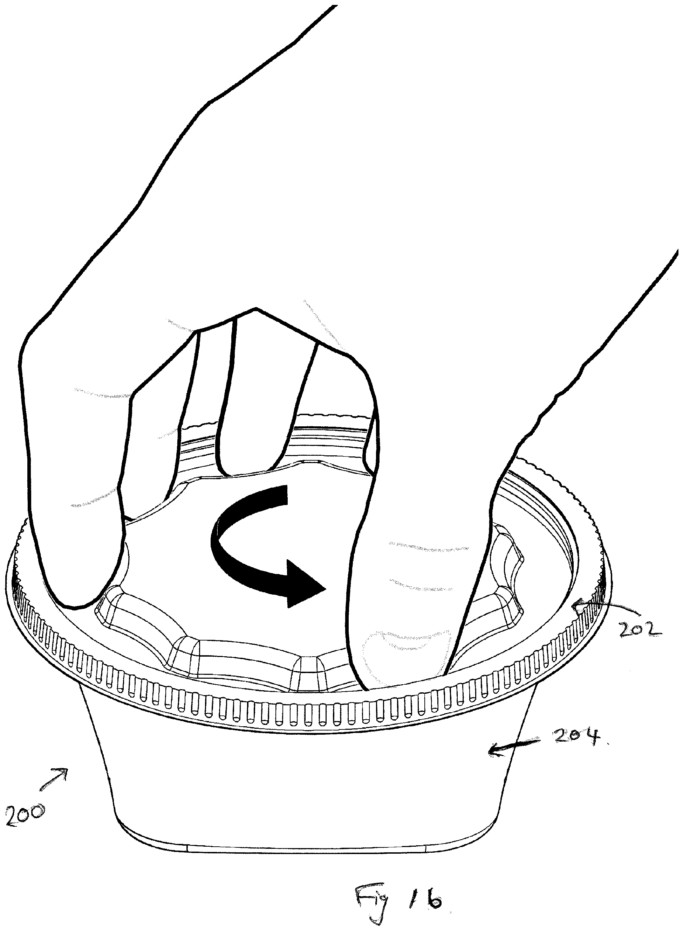

In the packaging system 200 of Figures 14 and 15, the central portion 206 is provided with a plurality of finger recesses 232 for improving grip. In use, the user can either use the ribbed surface 216 (refer to Figure 13) or the finger recesses 232 (see Figure 16) for screwing or unscrewing the lid 202 to the container 204. This is particularly convenient for use on larger diameter lids, to aid opening and closing.

Table 2 shows a possible example of the dimensions of a screw thread used in the packaging system 200 of Figures 14 to 16. The dimensions below are described in relation to the container 204 having a height of 50mm and a diameter of 124mm. It will be appreciated that the lid 202, having a height of 6mm, a diameter of 129.19mm and a gauge of 0.60mm, will have corresponding dimensions to fit accordingly.

**Table 2: An example of the dimensions of a container screw thread of container 204.**

| | |
|---|---|
| Pitch | 3.85mm |
| Width | 3.60mm |
| Depth | 0.70mm |
| Gauge | 1.0mm |
| Revolutions of thread | 1.5 |

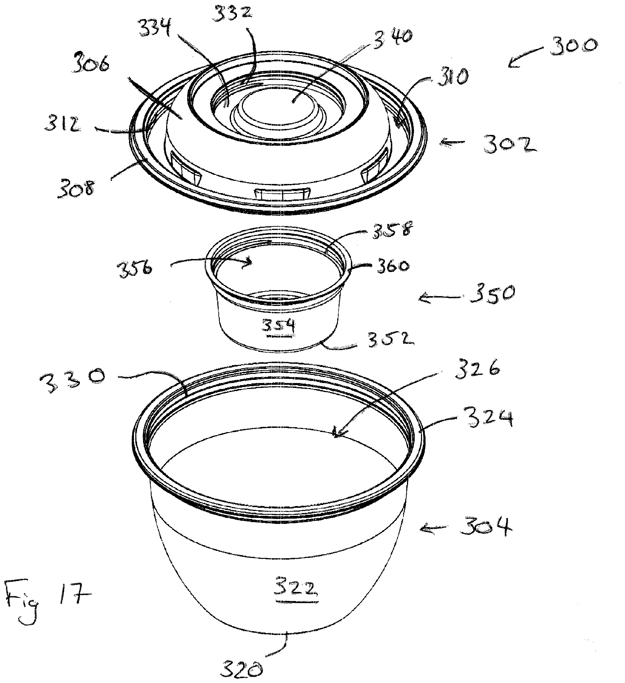

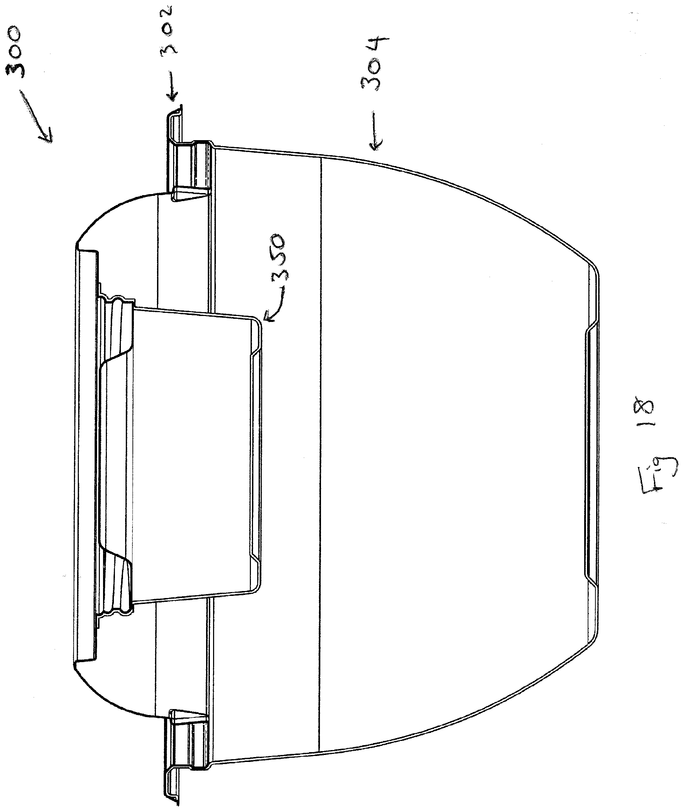

Referring now to Figures 17 and 18, yet another embodiment of a packaging system 300 is provided. The packaging system 300 includes a lid 302, a primary or first container 304, and a secondary or second container 350.

The lid 302 includes a central portion 306, an outer rim 308 and an inner protruding portion 340. The central portion 306 is separated from the outer rim 308 by a generally annular shaped first space 310. The central portion 306 is separated from the inner protruding portion 340 by a generally annular shaped second space 334. The outer rim 308 also includes a clip retaining mechanism 312, which could alternatively be a first screw thread as described in relation to Figures 1 to 16 above.

Additionally, the lid 302 includes a second screw thread 332 in a side wall of the central portion 306 adjacent the second space 334. As will become clear from the description below, the second screw thread 332 serves to secure the secondary container 350 to the lid 302.

The primary container 304 includes a substantially circular base 320 and a substantially circular side wall 322. An upper rim 324 is provided at the uppermost part of the side wall 322, having an opening 326 for the ingress or egress of a product. The primary container 304 is also provided with a clip retaining mechanism 330 in the side wall 322, at a point where the side wall 322 meets the upper rim 324, which is complementary to, and configured to engage with, the clip retaining mechanism 312 of the lid 302. Alternatively, the primary container 304 could include a screw thread mechanism in lieu of the clip retaining mechanism 330, which is complementary to a first screw thread of the lid 302. In this way, as described above, the lid 302 can be secured to the primary container 304 thereby sealing a product within the primary container 304.

The packaging system 300 also includes a secondary container 350. The secondary container 350 includes a substantially circular base 352 and a substantially circular side wall 354. An upper rim 358 is provided at the uppermost part of the side wall 354, having an opening 356 for the ingress or egress of a product. The secondary container 350 is also provided with a screw thread 358 in the side wall 354 at a point where the side wall 354 meets the upper rim 360. The screw thread 358 is complementary to the second screw thread 332 of the lid 302. In this way, the lid 302 can be secured to the secondary container 350 thereby sealing a product within the secondary container 350.

In an assembled condition, as shown in Figure 18, the secondary container 350 is secured to the lid 302 and within the primary container 304.

The packaging system 300 may include threads having substantially similar dimensions as described in relation to either above described packaging system 100, 200.

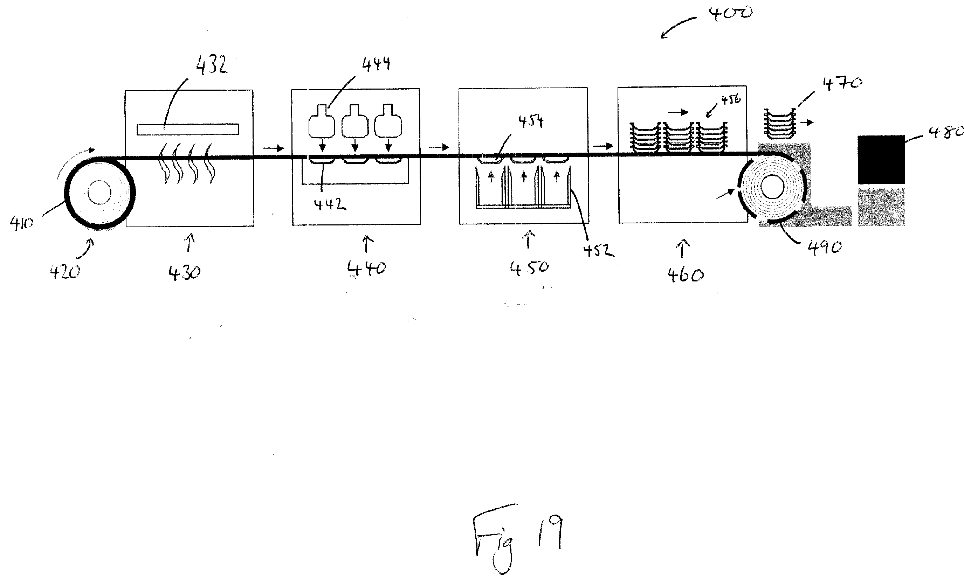

Referring now to Figure 19, there is provided a basic thermoforming diagram illustrative of a thermoforming apparatus 400 for thermoforming any of the packaging systems 100, 200, 300, more specifically the components thereof, as described above.

The thermoforming apparatus 400 includes a sheet material 410, for example recycled PET, PET or PP, on a reel 420. The sheet material 410 is the basic starting material for producing a thermoformed packaging system as described herein. The sheet material 410 is fed from the reel 420 into a heating station 430 having a heating element 432. The heating element 432 provides heat, i.e. thermal energy, to the sheet material 410. This allows the sheet material 410 to become pliable and workable..

The heated sheet material 410 is then provided from the heating station 430 into a forming station 440. The forming station 440 includes one or more moulds 442 for imparting the shape of the packaging system to the sheet material 410. There may also be provided one or more plugging mechanisms 444, a vacuum (not shown) and/or pressure inducing means (not shown). The forming station 440 generally causes the heated and pliable sheet material 410 to take on the shape of the mould 442 as the sheet material 410 cools therein. Additional cooling means, such as a water bath, a water jacket, a condenser or jets of cool air, may be provided to assist the cooling process. The additional cooling means may be provided as part of the one or more moulds 442.

Once the sheet material 410 has taken the shape of the moulds 442, the sheet material 410, having moulded articles 454, enters the cutting station 450. The cutting station 450 may include a series of blades 452 configured to cut, perforate, score or generally weaken the sheet material 410 between adjacent moulded articles 454.

Following the cutting, perforation, scoring or weakening of the sheet material 410 between adjacent moulded articles 454, the moulded articles 454 enter the stacking station 460. Within the stacking station 460, the moulded articles 454 are pushed out of the sheet material 410 to provide a series of stacked packaging systems 456. The moulded articles 454 may be pushed by any conventional means.

The stacked packaging systems 456 can be separated into single units or into groups 470 of stacked packaging systems. Thereafter, the packaging systems can be processed and packaged into one or more boxes 480 for transporting.

The remaining sheet material having cut outs, from which the moulded articles 454 are pushed, is collected as skeletal waste 490 on another reel, or fed through an in-line granulation system. The skeletal waste 490 can be recycled or reused.

Throughout the apparatus 400, the sheet material 410 may be transferred by means of conveyors, belts or the like. The sheet material 410 may additionally be gripped by a series of chains to aid guidance through the apparatus 400.

There is also provided a method 500 of thermoforming the packaging system as described above. The method 500 includes a step of providing a sheet material into a thermoforming apparatus 510, the thermoforming apparatus including a heating station, a forming station, a cutting station and a stacking station as described above.

The sheet material is first provided into the heating station at step 520. The sheet material is subjected to heat, such that the sheet material is made to be pliable. Once the sheet material is heated to the appropriate temperature, the heated sheet material is provided into the forming station at step 530.

The forming station includes a mould that is suitable for creating the desired shape and features of the packaging system. There may be provided a single mould, or a plurality of moulds, for forming a single or multiple packaging systems. There is provided the step of moulding the heated sheet in a mould 532. Optionally, during this step, there may be provided the steps of applying at least one of vacuum, pressure and plugging 534 such that the heated sheet material is forced into the mould. The heated sheet material is allowed to cool at step 536, either passively or actively, such that the sheet material takes on the shape of the mould to form a moulded article within the sheet material. When using active cooling, a water bath, a water jacket, a condenser, jets of cool air, or the like may be utilised. The vacuum, pressure and/or plugging is removed once the sheet material has taken on the shape of the mould. The active cooling means may be provided as part of the one or more moulds 442 (see Figure 19).

The moulded articles, formed as part of the sheet material, are then provided into the cutting station at step 540. The sheet material between adjacent moulded articles is cut, perforated, scored or generally weakened at step 542 using a blade, knife or the like. The cut, perforated, scored or generally weakened sheet material and moulded articles are then provided into the stacking station at step 550
The stacking station is configured to push the moulded articles out of the sheet material at step 552, thereby providing the final packaging system or components thereof at step 560. Since the moulded articles are cut, perforated, scored or generally weakened and adjacent points of the sheet material between moulded articles, the stacking section can easily push each moulded article out of the sheet material to provide the final packaging system or components thereof. The stacking section may include any known means for pushing such moulded articles out of the sheet material. The stacking station may also be configured to stack the packaging system, or components thereof, together, thereby forming a series of stacking packaging systems, or components thereof at step 570.

After the final products have been produced from the stacking station, skeletal waste is provided at step 580. Skeletal waste is the remainder of the sheet material after the formed packaging systems, or components thereof, have been produced and removed. The method may further comprise the step of reusing, or recycling, the skeletal waste at step 582.

The sheet material is generally provided throughout each station on a conveyor. The sheet material may be gripped by chains which guide the sheet material through the apparatus. Moreover, the sheet material may be provided in a roll and unrolled gradually from the roll, onto the conveyor or chains, and through the apparatus. Additionally, or alternatively, the skeletal waste may be caused to form a roll as it is provided at the end of the process, or fed through an in-line granulation system.

It will be appreciated for persons skilled in the art that the above embodiments have been described by way of example only and not in any limiting sense, and that various alterations and modifications are possible without departing from the scope of the invention as defined by the appended claims.

## Claims

1. A thermoformed packaging system comprising:
A lid comprising a lid screw thread; and
A container comprising:
a container screw thread,
a chamber for receiving a product,
an opening configured to be closed and sealed by the lid;
Wherein the lid screw thread and the container screw thread are complementary such that the lid can be screwed to the container, thereby closing and sealing the opening.

2. A thermoformed packaging system according to claim 1, wherein a surface of the container comprises the container screw thread.

3. A thermoformed packaging system according to claim 2, wherein an inner surface of the container comprises the container screw thread.

4. A thermoformed packaging system according to any preceding claim, wherein the lid comprises a central closure formation and an outer rim;
the outer rim including the lid screw thread.

5. A thermoformed packaging system according claim 4, wherein the outer rim includes the lid screw thread either in that:
the outer rim includes an inner wall and an outer wall defining a generally annular space therebetween, wherein the inner wall comprises the lid screw thread;
or in that:
the outer rim includes an inner wall and an outer wall defining a generally annular space therebetween, wherein the outer wall comprises the lid screw thread

6. A thermoformed packaging system according to claim 4 or claim 5, wherein the container comprises a flange configured to cooperate with the annular space of the lid.

7. A thermoformed packaging system according to any preceding claim, wherein the lid screw thread and/or the container screw thread includes one or more of:
1.25 to 2 revolutions;
A pitch between about 3mm and about 4mm;
A width between about 2.85mm and about 3.85mm; and
A depth between about 0.5mm and about 1.0mm.

8. A thermoformed packaging system according to any preceding claim, wherein the lid includes a surface formation configured to assist the user in securing or removing the lid from the container.

9. A thermoformed packaging system according to claim 8, wherein the surface formation comprises a textured surface of the outer rim and/ or one or more finger recesses in the central portion of the lid.

10. A thermoformed packaging system according to any preceding claim, wherein the lid comprises an inner protruding portion formed in the closure formation and including a retaining mechanism for securing a secondary container.

11. A thermoformed packaging system according to claim 10, further comprising a secondary container with a secondary retaining mechanism; wherein the retaining mechanism of the closure formation is complementary to the secondary retaining mechanism.

12. A method of thermoforming a packaging system according to any preceding claim, the method comprising the steps of:
providing a sheet material;
heating the sheet material and applying the sheet material into one or more moulds;
cooling the sheet material in the one or more moulds to provide one or more moulded articles within the sheet material; and
separating the one or more moulded articles from the sheet material to provide one or more packaging systems and skeletal waste.

13. A method according to claim 12, wherein the step of applying the sheet material into one or more moulds comprises forming at least one lid comprising a lid screw thread and at least one container comprising a container screw thread, a chamber for receiving a product, and an opening configured to be closed and sealed by the lid, wherein the lid screw thread and the container screw thread are complementary.

14. A method according to claim 12 or claim 13, wherein the step of heating the sheet material includes one or more of: applying vacuum, applying pressure, and applying plugging; and/ or
wherein the step of cooling the sheet material includes one or more of:
applying a water bath, applying a water jacket, applying a condenser, and applying a jet of cool air; and/ or
wherein the step of separating the one or more moulded articles from the sheet material includes the step of cutting, perforating, scoring or weakening the sheet material; and subsequently pushing the moulded articles out of the cut, perforated, scored or weakened sheet material.

15. A thermoforming apparatus for implementing the method of any of claims 11 - 14.
